# EUROPÄISCHE PATENTSCHRIFT

(11) **EP 3 297 882 B1**
(45) Veröffentlichungstag und Bekanntmachung des Hinweises auf die Patenterteilung: **02.09.2020**
(21) Anmeldenummer: 16720833.9
(22) Anmeldetag: 04.05.2016
(51) Int. Cl.: B60W 20/40, B60K 6/20

(54) **BETRIEB EINES HYBRIDFAHRZEUGS NACH FESTSTELLEN DES ERREICHENS ODER UNTERSCHREITENS EINES UNTEREN KRAFTSTOFFFÜLLSTANDS**
OPERATION OF A HYBRID VEHICLE AFTER DETECTING THAT A LOWER FUEL FILLING LEVEL HAS BEEN REACHED OR UNDERSHOT
FONCTIONNEMENT D'UN VÉHICULE HYBRIDE UNE FOIS CONSTATÉ QUE LE NIVEAU DE CARBURANT A ATTEINT OU EST DESCENDU SOUS UN NIVEAU DE CARBURANT INFÉRIEUR

(30) Priorität: 20.05.2015 DE 102015209248
(43) Veröffentlichungstag der Anmeldung: 28.03.2018
(73) Patentinhaber: Bayerische Motoren Werke Aktiengesellschaft, 80809 München (DE)
(72) Erfinder: SCHWARZ, Johannes, 93138 Lappersdorf (DE)
(86) Internationale Anmeldenummer: PCT/EP2016/060014
(87) Internationale Veröffentlichungsnummer: WO 2016/184688

(56) Entgegenhaltungen:
- WO-A1-2013/154094
- JP-A- 2009 012 593
- JP-A- 2014 113 945

## Beschreibung

Die Erfindung betrifft ein Verfahren zum Betreiben eines Hybridfahrzeugs mit einem Verbrennungsmotor und einer elektrischer Maschine zum Antreiben des Fahrzeugs gemäß dem Oberbegriff des Anspruchs 1 sowie eine dem Verfahren entsprechende Steuereinrichtung zum Steuern des Betriebs eines Hybridfahrzeugs.

Bei einem derartigen Hybridfahrzeug wird der Verbrennungsmotor aus einem Kraftstofftank mit Kraftstoff (z. B. Benzin oder Diesel) versorgt, wobei der Kraftstofffüllstand des Kraftstofftanks mit einem Kraftstofffüllstandssensor bestimmt wird. Die elektrische Maschine wird aus einem Energiespeicher (z. B. einer Batterie oder einem Kondensator) mit elektrischer Energie versorgt.

Das Fahrzeug ist über die elektrische Maschine im rein elektrischen Betrieb bei ausgeschaltetem Verbrennungsmotor antreibbar.

Aus der Druckschrift DE 10 2012 108 485 A1 ist ein Verfahren zum Betreiben eines Hybridfahrzeug mit einem Verbrennungsmotor und einer elektrischen Maschine bekannt, wobei das Hybridfahrzeug rein elektrisch über die elektrische Maschine antreibbar ist, wenn der Kraftstofftank zur Versorgung des Verbrennungsmotors mit Kraftstoff leer ist. Wenn der Verbrennungsmotor bei leerem Kraftstofftank ausfällt, wird eine rein elektrische Weiterfahrt des Hybridfahrzeugs nur unter der Bedingung ermöglicht, dass ein Neustart des Hybridfahrzeugs seitens des Fahrers eingeleitet wird. Dazu wird vorzugsweise die Zündung der Brennkraftmaschine erst ausgeschaltet und anschließend wieder eingeschaltet.

Bei einem derartigen Hybridfahrzeug kann je nach Ausführungsart des Kraftstofffüllstandssensors der Sensor eine gewisse Restmenge an Kraftstoff im Tank nicht erfassen und es wird der Antriebssteuerung ein schon leerer Kraftstofftank angezeigt, obwohl noch eine gewisse Menge Kraftstoff vorhanden ist. Wenn der Sensor einen leeren Tank signalisiert, wird der Verbrennungsmotor abgestellt und das Fahrzeug wird nur noch mit dem Elektromotor im rein elektrischen Betrieb angetrieben bis der Ladezustand (SOC) des Energiespeichers des Elektroantriebs soweit abgesunken ist, dass das Fahrzeug auch nicht mehr im rein elektrischen Betrieb angetrieben werden kann. Solange das Fahrzeug nicht mit einer gewissen Mindestmenge an Kraftstoff wieder betankt wird und der Füllstand nicht wieder ein bestimmtes Mindestmaß erreicht (z. B. mindestens 5 I Kraftstoff), verhindert die Antriebssteuerung ein erneutes Starten des Verbrennungsmotors, während das Fahrzeug nicht über die elektrische Maschine angetrieben werden kann, solange der Ladezustand des Energiespeichers zu gering ist. Eine derartige Betriebsweise weist den Nachteil auf, dass das Fahrzeug bei leer angezeigten Kraftstofftank und zu niedrigem Ladezustand des elektrischen Energiespeichers nicht mehr fahren kann, obwohl noch ausreichend Restkraftstoff im Tank vorhanden ist, um eine gewisse Strecke zu fahren, beispielsweise um eine Kraftstofftankstelle oder eine elektrische Ladestation zu erreichen. Im Fall einer Notfallsituation oder einer Gefahrensituation könnte es von großer Wichtigkeit sein, diesen Restkraftstoff im Tank doch noch zu nutzen und das Fahrzeug über den Verbrennungsmotor für eine gewisse Restlaufstrecke noch zu betreiben.

Darüber hinaus ist es nachteilig, dass im Fall eines leer gefahrenen Kraftstofftanks der Fahrer bei Auftanken deutlich weniger Kraftstoff in den Tank füllen kann als dieser erwartet, zum Beispiel nur 42 I anstatt eines angegebenen Tankvolumens von 45 I. Dies kann beim Fahrer zu Irritationen führen, da der Fahrer erwartet, man könne den Tank komplett leer fahren.

Ein Verfahren bzw. eine Seuereinchtung gemäß dem Oberbegriff des Anspruchs 1 bzw. 12 ist außerdem aus der JP 2009 012593 A bekannt.

Es ist Aufgabe der Erfindung, ein demgegenüber verbessertes Betriebsverfahren zum Betreiben eines Hybridfahrzeugs und eine entsprechend verbesserte Steuereinrichtung zum Steuern des Betriebs eines Hybridfahrzeugs anzugeben, bei dem ein Restkraftstoff im Tank noch genutzt werden kann.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Betreiben eines Hybridfahrzeugs mit einem Verbrennungsmotor und einer elektrischen Maschine zum Antreiben des Hybridfahrzeugs. Bei dem Hybridfahrzeug handelt es sich typischerweise um einen sogenannten parallelen Hybrid, bei dem sowohl die elektrische Maschine als auch der Verbrennungsmotor auf den Antriebsstrang wirken; hierbei kann beispielsweise auch vorgesehen sein, dass der Verbrennungsmotor und die elektrische Maschine auf unterschiedliche Fahrzeugachsen wirken (dies wird auch als Achshybrid bezeichnet). Bei dem Hybridfahrzeug handelt es vorzugsweise um ein Plug-in-Hybridfahrzeug, wobei der Energiespeicher des Elektroantriebs extern über ein Stromnetz aufgeladen werden kann.

Der Verbrennungsmotor wird aus einem Kraftstofftank mit Kraftstoff (z. B. Benzin oder Diesel) versorgt, wobei der Kraftstofffüllstand des Kraftstofftanks mit einem Kraftstofffüllstandssensor bestimmt wird. Bei dem Kraftstofffüllstandssensor handelt es sich beispielsweise um einen Sensor, der den Füllstand direkt misst, beispielsweise um einen Kraftstofffüllstandssensor mit Schwimmer, dessen vertikaler Höhenstand messbar ist (z. B. in Form eines elektrischen Widerstands, der mit dem vertikalen Höhenstand zusammenhängt). Alternativ wäre auch ein Kraftstofffüllstandsensor denkbar, der mittels Durchflusssensoren arbeitet: Hierbei wird die entnommene und hinzugefügte Kraftstoffmenge gemessen und hieraus der Füllstand berechnet.

Die elektrische Maschine wird aus einem Energiespeicher (z. B. aus einer Batterie oder einem Kondensator) mit elektrischer Energie versorgt.

Das Fahrzeug unterstützt einen rein elektrischen Betrieb, bei dem bei ausgeschaltetem Verbrennungsmotor das Fahrzeug über die elektrische Maschine angetrieben wird.

Gemäß dem Verfahren wird zunächst festgestellt, dass der Kraftstofffüllstandssensor das Erreichen oder Unterschreiten eines unteren Füllstands anzeigt. Vorzugsweise entspricht der untere Füllstand einem leeren Kraftstofftank, wobei in diesem Fall festgestellt wird, dass Kraftstofffüllstandssensor einen leeren Kraftstofftank anzeigt. Wie bereits eingangs ausgeführt, ist jedoch typischerweise trotz eines als leer angezeigten Kraftstofftanks noch eine gewisse Menge Kraftstoff im Tank vorhanden. Das erfindungsgemäße Verfahren ist jedoch nicht auf den Fall eines vom Kraftstoffsensor als leer erkannten Kraftstofftanks beschränkt.

In Reaktion darauf wird der Verbrennungsmotor ausgeschaltet und das Fahrzeug wird über die elektrische Maschine im rein elektrischen Betrieb bei ausgeschaltetem Verbrennungsmotor angetrieben. Bei Ausschalten des Verbrennungsmotors wird dem Fahrer vorzugsweise ein insbesondere optischer Warnhinweis gegeben, beispielsweise, dass keine verbrennungsmotorische Reichweite mehr verfügbar ist.

Das erfindungsgemäße Verfahren kennzeichnet sich dadurch, dass nach einem rein elektrischen Betrieb des Fahrzeugs bis der Fahrer das Fahrzeug aufgrund mangelnder elektrischer Betriebsfähigkeit stoppt oder das Fahrzeug liegen bleibt, der Verbrennungsmotor wieder eingeschaltet wird und das Fahrzeug über den Verbrennungsmotor im Sonderbetrieb bei eingeschaltetem Verbrennungsmotor angetrieben wird, sofern eine Bedingung für den Sonderbetrieb erfüllt sind. Es kann sich auch um eine Mehrzahl von Bedingungen handeln, die alle erfüllt sein müssen, damit der Verbrennungsmotor eingeschaltet werden kann und das Fahrzeug im Sonderbetrieb über den Verbrennungsmotor angetrieben werden kann.

Das erfindungsgemäße Verfahren erlaubt es also, bei Vorliegen der einen bzw. der mehreren Bedingungen für den Sonderbetrieb den Verbrennungsmotor wieder zu starten und den verbliebenden Restkraftstoff im Sonderbetrieb zu nutzen, beispielsweise um eine Tankstelle zu erreichen.

Da der Restkraftstoff zumindest teilweise, vorzugsweise sogar vollständig genutzt werden kann, werden Irritationen des Fahrers beim Nachtanken vermieden, da der Fahrer beim Nachtanken sich der noch im Tank befindlichen Restkraftmenge (diese kann unter Umständen beim Nachtanken näherungsweise null sein) bewusst ist, die zusammen mit der getankten Menge an Kraftstoff dem angegebenen Tankvolumen des Fahrzeugs entspricht.

Das erfindungsgemäße Verfahren ist nicht auf den Fall eines vom Kraftstoffsensor als leer erkannten Kraftstofftank beschränkt, sondern könnte auch eingesetzt werden, wenn der Verbrennungsmotor beispielsweise bei Unterschreiten eines vom Sensor detektierten unteren Füllstands von 1 Liter Kraftstoff ausgeschaltet wird, so dass das Fahrzeug im rein elektrischen Betrieb angetrieben wird. Erfindungsgemäß kann der verbleibende Restkraftstoff (z. B. 1 Liter) beim Ausschalten des Verbrennungsmotors später zumindest teilweise genutzt werden, wenn die ein oder mehreren Bedingungen für den Sonderbetrieb erfüllt sind. Der untere Füllstand entspricht vorzugsweise einem Wert von 0 bis 2 Liter Kraftstoff, beispielsweise 0 Liter oder 1 Liter.

Es sind Betriebssituationen für den Sonderbetrieb denkbar, in denen kein Verbrennungsmotor betrieben wird. Beispielsweise kann es sein, dass der Verbrennungsmotor bei einer Bergabfahrt im Sonderbetrieb nicht betrieben wird.

Die ein oder mehreren Bedingungen für den Sonderbetrieb umfasst die Bedingung, dass ein fahrerseitiger Neustart des Hybridfahrzeugs seitens des Fahrzeugs festgestellt wird. Der Neustart wird beispielsweise mittels einer fahrerseitigen Bedienhandlung zum Ausschalten der Zündung und mittels einer danach stattfindenden fahrerseitigen Bedienhandlung zum Einschalten der Zündung ausgelöst, beispielsweise durch ein erstes Betätigen eines Start/Stopp-Tasters zum Ausschalten und ein zweites Betätigen des Start/Stopp-Tasters zum Einschalten; diese Abfolge des Start/Stopp-Tasters wird vom Fahrzeug registriert. Das Ein- und Ausschalten der Zündung wird auch als Klemmenwechsel bezeichnet.

Wenn der Fahrer also beispielsweise im Fall mangelnder Betriebsfähigkeit des elektrischen Antriebs (z. B. beim Liegenbleiben) einen Klemmenwechsel auslöst, kann hierdurch ein Sonderbetrieb des Fahrzeugs bei eingeschaltetem Verbrennungsmotor ausgelöst werden.

Zusätzlich können die eine oder mehreren Bedingungen für den Sonderbetrieb umfassen, dass zumindest ein Betriebsparameter des elektrischen Antriebs, der mit der Betriebsfähigkeit des elektrischen Antriebs im Zusammenhang steht, ein Kriterium für eine verminderte Betriebsfähigkeit des elektrischen Antriebs erfüllt. Beispielsweise kann eine Bedingung für den Sonderbetrieb sein, dass der Ladezustand (SOC - State of Charge) kleiner oder kleiner gleich als ein bestimmter Schwellwert für den Ladestand ist.

Beispielsweise kann bei einem Neustart des Fahrzeugs geprüft werden, ob der Ladestand kleiner oder kleiner gleich dem Schwellwert für den Ladestand ist. Wenn dieser der Fall ist, wird der Sonderbetrieb aktiviert. Andernfalls wird beispielsweise der rein elektrische Betrieb aktiviert.

Ein Sonderbetrieb wird beendet und der Verbrennungsmotor wird abgeschaltet, wenn vorzugsweise eine Bauteildiagnosefunktion einen Kraftstoffmangel feststellt und vorzugsweise ein Abschalten des Verbrennungsmotors aufgrund Kraftstoffmangel fordert. Beispielsweise wird von der Diagnosefunktion der Kraftstoffhochdruckpumpe festgestellt, dass kein Kraftstoff mehr vorliegt, so dass diese ein Abschalten des Verbrennungsmotos fordert. Der Verbrennungsmotor kann daher noch möglichst lange mit dem Restkraftstoff betrieben werden, bis nahezu kein Kraftstoff mehr verfügbar ist.

Ein zweiter Aspekt der Erfindung betrifft eine Steuereinrichtung zum Steuern des Betriebs eines Hybridfahrzeugs mit einem Verbrennungsmotor und einer elektrischen Maschine zum Antreiben des Hybridfahrzeugs. Die Steuereinrichtung ist eingerichtet, festzustellen, dass der Kraftstofffüllstandssensor das Erreichen oder Unterschreiten eines unteren Füllstands anzeigt, und in Reaktion hierauf, ein Ausschalten des Verbrennungsmotors und ein Antreiben des Fahrzeugs über die elektrische Maschine im rein elektrischen Betrieb bei ausgeschaltetem Verbrennungsmotor auszulösen. Die Steuereinrichtung kennzeichnet sich dadurch, dass die Steuereinrichtung eingerichtet ist, nach dem rein elektrischem Betrieb des Fahrzeugs ein Einschalten des Verbrennungsmotors und ein Antreiben des Fahrzeugs über den Verbrennungsmotor im Sonderbetrieb bei eingeschaltetem Verbrennungsmotor auszulösen, sofern eine oder mehrere Bedingungen für den Sonderbetrieb erfüllt sind.

Die vorstehenden Ausführungen zum erfindungsgemäßen Verfahren nach dem ersten Aspekt der Erfindung gelten in entsprechender Weise auch für die erfindungsgemäße Steuereinrichtung nach dem zweiten Aspekt der Erfindung.

Die Erfindung wird nachfolgend unter Zuhilfenahme auf die beigefügten Zeichnungen anhand eines Ausführungsbeispiels beschrieben. In diesen zeigen:
- Fig. 1: ein Ausführungsbeispiel eines erfindungsgemäßen Betriebsverfahren zum Betreiben eines Hybridfahrzeugs; und
- Fig. 2: eine beispielhafte Abfolge von Betriebsmodi über der Fahrstrecke.

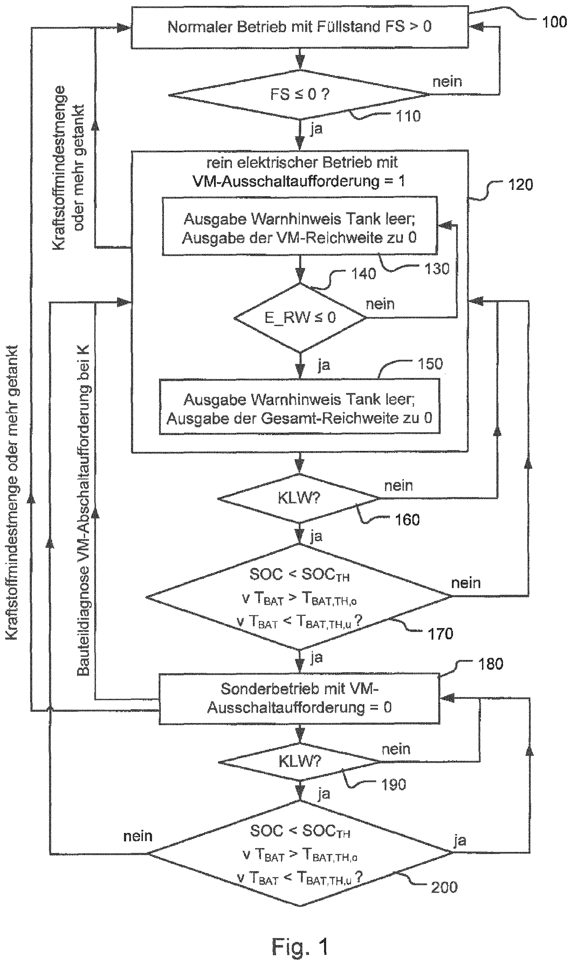

In Fig. 1 ist ein Ausführungsbeispiel eines erfindungsgemäßen Betriebsverfahrens zum Betreiben eines Hybridfahrzeugs dargestellt. Das Bezugszeichen 100 kennzeichnet den normalen Betrieb. Im normalen Betrieb 100 kann das Fahrzeug parallel über einen Verbrennungsmotor und eine elektrische Maschine (Hybrid-Betriebsart), über den Verbrennungsmotor alleine (verbrennungsmotorische Betriebsart) oder über die elektrische Maschine (elektrische Betriebsart) alleine angetrieben werden. Die Auswahl, in welchem dieser drei Betriebsarten das Fahrzeug im normalen Betriebszustand 100 angetrieben wird, übernimmt eine Hybrid-Betriebsstrategie, beispielsweise in Abhängigkeit des aktuell vom Fahrer über das Fahrpedal anforderten Antriebsmoments. Im normalen Betrieb 100 wird laufend der mittels eines Füllstandssensors gemessene Füllstand FS des Kraftstoffs im Kraftstofftank überwacht. Es wird in der Abfrage 110 geprüft, ob der aktuell gemessene Füllstand FS kleiner gleich dem Wert 0 ist, d. h. es wird geprüft, ob der Kraftstoffsensor einen leeren Kraftstofftank anzeigt. Wenn dies nicht der Fall ist, verbleibt das Fahrzeug im normalen Betrieb 100.

Sofern der gemessene Füllstand einen leeren Kraftstofftank anzeigt (FS ≤ 0), wechselt das Fahrzeug in einen rein elektrischen Zwangsbetrieb 120, bei dem der Verbrennungsmotor zwangsweise ausgeschaltet sein muss. Beim Wechsel in den rein elektrischen Zwangsbetrieb 120 wird eine Ausschaltaufforderung zum Ausschalten des Verbrennungsmotors an das Motorsteuergerät des Verbrennungsmotors ausgegeben, indem die binäre Größe VM-Ausschaltaufforderung auf 1 gesetzt wird. Sofern der Verbrennungsmotor vor Wechsel in den rein elektrischen Zwangsbetrieb 120 eingeschaltet war, wird dieser dann ausgeschaltet, so dass das Fahrzeug über die elektrische Maschine ohne Unterstützung durch den Verbrennungsmotor angetrieben wird. Im rein elektrischen Zwangsbetrieb wird im Unterschied zu dem normalen Betrieb 100 zwingend nur die elektrische Maschine zum Antrieb des Fahrzeugs verwendet. Mit dem Wechsel vom normalen Betriebszustand 100 in den rein elektrischen Zwangsbetrieb 120 wird über die Instrumentenkombination im Fahrzeugcockpit ein optischer Warnhinweis ausgegeben, der signalisiert, dass der Kraftstofftank leer ist (s. Schritt 130). Ferner wird in der Instrumentenkombination angezeigt, dass die verbrennungsmotorisch noch zurücklegbare Reichweite VM_RW null beträgt. Es wird ferner laufend die rein elektrisch noch zurücklegbare Reichweite E_RW berechnet, beispielsweise in Abhängigkeit des SOC der Fahrzeugbatterie und des elektrischen Leistungsbedarfs. Sofern die rein elektrisch zurücklegbare Reichweite E_RW kleiner gleich 0 wird (s. die Abfrage 140), wird in der Instrumentenkombination angezeigt, dass die Gesamtreichweite RW (mit RW=VM_RW + E_RW) null ist (s. Schritt 150). Ungefähr zu diesem Zeitpunkt kommt es zum Liegenbleiben des Fahrzeugs. Spätestens dann, aber auch schon jederzeit vor dem Liegenbleiben des Fahrzeugs, kann der Fahrer von dem rein elektrischen Zwangsbetrieb 120 in einen Sonderbetrieb 180 wechseln, in dem der Verbrennungsmotor wieder zum Antrieb des Fahrzeugs genutzt werden kann.

Zum Wechsel in den Sonderbetrieb 180 muss der Fahrer das Fahrzeug durch zweifaches Betätigen des Motorstart/Motorstopp-Tasters neustarten; dies wird im Folgenden auch als Klemmenwechsel bezeichnet. Das Vorliegen eines Klemmenwechsels (in Fig. 1 mit KLW abgekürzt) wird in Schritt 160 regelmäßig geprüft. Sofern kein Klemmenwechsel festgestellt wird, verbleibt das Fahrzeug im rein elektrischen Zwangsbetriebsmodus 120. Wenn ein Klemmenwechsel festgestellt wird, wird in der Abfrage 170 geprüft, ob zumindest einer der Betriebsparameter SOC und T_{BAT}, die jeweils mit der Betriebsfähigkeit des elektrischen Antriebs im Zusammenhang stehen, ein Kriterium für eine verminderte Betriebsfähigkeit des elektrischen Antriebs erfüllt. Der Betriebsparameter SOC gibt den Ladezustand SOC der elektrischen Batterie zur Versorgung der elektrischen Antriebsmaschine an; der Betriebsparameter T_{BAT} entspricht der Temperatur der elektrischen Batterie.

Sofern bei Neustart des Fahrzeugs der Ladezustand SOC der Batterie kleiner als ein Schwellwert SOC_{TH} ist oder die Batterietemperatur T_{BAT} außerhalb des Temperaturfensters von der unteren Grenztemperatur T_{BAT,TH,u} bis zur oberen Grenztemperatur T_{BAT,TH,o} ist (s. die Abfrage 170), wird im Fall eines unmittelbar vorher ausgelösten Klemmenwechsels (s. die Abfrage 160) das Fahrzeug in den Sonderbetrieb 180 umgeschaltet, in dem der Verbrennungsmotor wieder zum Antrieb des Fahrzeugs genutzt werden kann. Die Ausschaltaufforderung zum Ausschalten des Verbrennungsmotors wird zurückgenommen, indem die binäre Größe VM-Ausschaltaufforderung auf 0 gesetzt wird, so dass die Hybrid-Betriebsstrategie trotz FS ≤ 0 das Einschalten des Verbrennungsmotors auslösen kann. Der Sonderbetrieb bedeutet nicht in jedem Fall, dass der Verbrennungsmotor eingeschaltet ist; die Betriebsstrategie hat jedoch die Möglichkeit, den Verbrennungsmotor zum Antrieb zu nutzen.

Sofern der Ladezustand SOC der Batterie größer gleich dem Schwellwert SOC_{TH} ist und die Batterietemperatur T_{BAT} in dem Temperaturfenster liegt (s. die Abfrage 170), verbleibt das Fahrzeug trotz Neustart durch den Fahrer im elektrischen Zwangsbetrieb 120.

Vorzugsweise entspricht der Sonderbetrieb 180 im Wesentlichen dem normalen Betrieb 100 mit dem Unterschied, dass die Ladeleistung zum Aufladen der Batterie im Vergleich zum normalen Betrieb 100 eingeschränkt ist. Die Ladeleistung wird vorzugsweise derart eingeschränkt, dass der dem Fahrer über die Instrumentenkombination mitteilbare Ladezustand unterhalb einer Schwelle bleibt, unter der dem Fahrer eine leere Fahrzeugbatterie angezeigt wird.

Im Sonderbetrieb kann die Hybrid-Betriebsstrategie den Verbrennungsmotor wieder starten, so dass das Fahrzeug mit dem verbleibenden Kraftstoff beispielsweise zu einer Tankstelle oder einer Ladestation gefahren werden kann.

Im Sonderbetrieb 180 überwachen mehrere Bauteildiagnosefunktionen verschiedener Bauteile (unabhängig von dem Kraftstofffüllstandssensor) das Vorliegen von Kraftstoff, um Schäden bei Fehlen von Kraftstoff zu vermeiden; beispielsweise die Diagnosefunktion der Kraftstoffhochdruckpumpe oder die Diagnosefunktion des Katalysators. Wenn eine der Bauteildiagnosefunktionen feststellt, dass kein Kraftstoff mehr vorhanden ist, wird seitens der Bauteildiagnosefunktion ein Abschalten des Verbrennungsmotors gefordert, so dass das Fahrzeug vom Sonderbetrieb 180 wieder in den elektrischen Zwangsbetrieb 120 wechselt. Beispielsweise stellt die Diagnosefunktion der Kraftstoffhochdruckpumpe fest, dass kein Kraftstoff mehr angesaugt werden kann, und fordert aus Bauteilschutzgründen ein Abschalten des Verbrennungsmotors.

Durch Auslösen eines Klemmenwechsels (s. die Abfrage 190) kann wieder vom Sonderbetrieb 180 in den elektrischen Zwangsbetrieb 120 gewechselt werden, sofern der Ladezustand SOC der Batterie größer gleich dem Schwellwert SOC_{TH} ist und die Batterietemperatur T_{BAT} in dem Temperaturfensters liegt (s. die Abfrage 200, die der Abfrage 170 entspricht).

Wenn bei einem Klemmenwechsel der Ladezustand SOC der Batterie kleiner als der Schwellwert SOC_{TH} ist oder die Batterietemperatur T_{BAT} außerhalb des Temperaturfensters von der unteren Grenztemperatur T_{BAT,TH,u} bis zur oberen Grenztemperatur T_{BAT,TH,o} liegt, verbleibt das Fahrzeug im Sonderbetrieb 180.

Es wird sowohl vom Sonderbetrieb 180 als auch vom rein elektrischen Zwangsbetrieb 120 in den Normalbetrieb 100 gewechselt, wenn eine bestimmte Kraftstoffmindestmenge (z. B. 5I) oder mehr getankt wird.

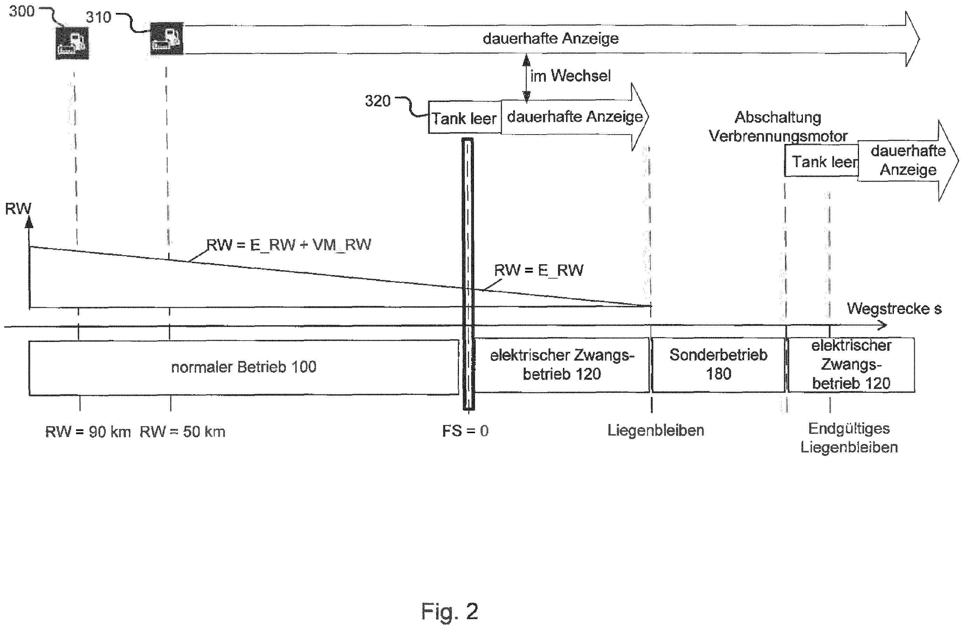

In Fig. 2 sind im unteren Bereich eine beispielshafte Abfolge von Betriebsmodi des Hybridfahrzeugs, im mittleren Bereich der Verlauf der gemessenen und in der Instrumentenkombination dargestellten Gesamt-Reichweite RW = E_RW + VM_RW und im oberen Bereich die Ausgabe von Reichweite-Warnhinweisen über der Wegstrecke s dargestellt.

Zunächst befindet sich das Fahrzeug im normalen Betrieb 100; der gemessene Kraftstofffüllstand FS ist größer null.

Bei einer gemessenen Gesamt-Reichweite RW von beispielsweise 90 km erscheint einer erste Reichweiten-Warnung 300 in Form eines Piktogramms in der Instrumentenkombination.

Bei einer gemessenen Gesamt-Reichweite RW von beispielsweise 50 km erscheint einer zweite Reichweiten-Warnung 310 in Form eines Piktogramms in der Instrumentenkombination. Das Piktogramm wird im Unterschied zu der ersten Reichweiten-Warnung 300 nun dauerhaft angezeigt und wird im Unterschied zu der ersten Reichweiten-Warnung 300 in einer Warnfarbe, z. B. gelb, dargestellt. Ferner wird im Rahmen der zweiten Reichweiten-Warnung 310 zusätzlich zum Piktogramm die Gesamtreichweite RW angezeigt. Darüber hinaus erscheint noch ein Texthinweis in der Instrumentenkombination, der erst nach Bestätigung durch den Fahrer verschwindet.

Wenn der gemessene Kraftstofffüllstand FS null erreicht, d. h. laut Messung der Tank angeblich leer ist, wechselt das Fahrzeug vom normalen Betrieb 100 in den elektrischen Zwangsbetrieb 120. Ferner erscheint ein Tankleer-Warnhinweis 320, der angibt, dass der Tank leer ist. Dieser Tankleer-Warnhinweis 320 wird dauerhaft im Wechsel mit der zweiten Reichweiten-Warnung 310 ausgegeben.

Während der Weiterfahrt im elektrischen Zwangsbetrieb 120 sinkt der Ladezustand SOC der Fahrzeugbatterie immer weiter ab, so dass es zu bestimmten Zeitpunkt zum Liegenbleiben des Fahrzeugs kommt. Die Gesamtreichweite RW ist dann auf null abgefallen.

Sofern der Fahrer dann einen Klemmenwechsel auslöst (oder bereits früher) und eine der Bedingungen aus der Abfrage 170 erfüllt ist, wechselt das Fahrzeug in den Sonderbetrieb 180, in dem der Verbrennungsmotor wieder zum Antrieb des Fahrzeugs genutzt werden kann, um beispielsweise eine Tankstelle zu erreichen.

Sofern das Fahrzeug nicht rechtzeitig betankt wird oder von außen geladen wird, stellt später beispielsweise die Diagnosefunktion der Kraftstoffhochdruckpumpe fest, dass kein Kraftstoff mehr angesaugt werden kann, was zu einer Abschaltung des Verbrennungsmotors führt. Das Fahrzeug wechselt dann wieder in den elektrischen Zwangsbetrieb 120. Durch den Sonderbetrieb 180 kann es in der Zwischenzeit zu einer teilweisen Aufladung der Fahrzeugbatterie gekommen sein, so dass das Fahrzeug im elektrischen Zwangsbetrieb 120 noch eine kurze Strecke fahren kann, bevor es zum endgültigen Liegenbleiben des Fahrzeugs kommt, sofern das Fahrzeug nicht von außen elektrisch geladen oder betankt wird.

## Patentansprüche

1. Verfahren zum Betreiben eines Hybridfahrzeugs mit einem Verbrennungsmotor und einer elektrischen Maschine zum Antreiben des Hybridfahrzeugs, wobei der Verbrennungsmotor aus einem Kraftstofftank mit Kraftstoff versorgt wird, der Kraftstofffüllstand (FS) des Kraftstofftanks mit einem Kraftstofffüllstandssensor bestimmt wird, die elektrische Maschine aus einem Energiespeicher mit elektrischer Energie versorgt wird und das Fahrzeug über die elektrische Maschine im rein elektrischen Betrieb bei ausgeschaltetem Verbrennungsmotor antreibbar ist, mit den Schritten:
- Feststellen (110), dass der Kraftstofffüllstandssensor das Erreichen oder Unterschreiten eines unteren Füllstands anzeigt; und
- in Reaktion hierauf, Ausschalten des Verbrennungsmotors und Antreiben des Fahrzeugs über die elektrische Maschine im rein elektrischen Betrieb (120) bei ausgeschaltetem Verbrennungsmotor,
**gekennzeichnet durch den zusätzlichen Schritt:**
- nach dem rein elektrischen Betrieb (120) des Fahrzeugs, Einschalten des Verbrennungsmotors und Antreiben des Fahrzeugs über den Verbrennungsmotor in einem Sonderbetrieb (180) bei eingeschaltetem Verbrennungsmotor, sofern eine oder mehrere Bedingungen für den Sonderbetrieb erfüllt sind (160, 170), wobei die eine oder die mehreren Bedingungen für den Sonderbetrieb umfassen, dass ein fahrerseitiger Neustart des Hybridfahrzeugs festgestellt wird (190), nachdem nach einem rein elektrischen Betrieb des Fahrzeugs der Fahrer das Fahrzeug aufgrund mangelnder elektrischer Betriebsfähigkeit gestoppt hat oder das Fahrzeug liegen geblieben ist.

2. Verfahren nach Anspruch 1, wobei nach zweifachem Betätigen des Motorstart/Motorstopp-Tasters durch den Fahrer in den Sonderbetrieb gewechselt wird.

3. Verfahren nach einem der vorhergehenden Ansprüche, wobei der Sonderbetrieb (180) im Wesentlichen dem normalen Betrieb (100) entspricht mit dem Unterschied, dass die Ladeleistung zum Aufladen der Batterie im Vergleich zum normalen Betrieb (100) eingeschränkt ist.

4. Verfahren nach einem der vorhergehenden Ansprüche, wobei der untere Füllstand einem leeren Kraftstofftank entspricht und in dem erstgenannten Schritt festgestellt wird, dass der Kraftstofffüllstandssensor einen leeren Kraftstofftank anzeigt.

5. Verfahren nach einem der vorhergehenden Ansprüche, wobei die eine oder mehreren Bedingungen (160, 170) für den Sonderbetrieb (180) umfassen, dass zumindest ein Betriebsparameter (SOC, T_{BAT}) des die elektrische Maschine und den Energiespeicher umfassenden elektrischen Antriebs, der mit der Betriebsfähigkeit des elektrischen Antriebs im Zusammenhang steht, ein Kriterium für eine verminderte Betriebsfähigkeit des elektrischen Antriebs erfüllt.

6. Verfahren nach Anspruch 5, wobei festgestellt wird, dass der Ladezustand (SOC) des Energiespeichers als Betriebsparameter des elektrischen Antriebs kleiner oder kleiner gleich als ein vorgegebener Schwellwert (SOC_{TH}) ist.

7. Verfahren nach einem der vorhergehenden Ansprüche, wobei die Bedingungen für einen Sonderbetrieb (180) umfassen, dass
- ein fahrerseitiger Neustart des Hybridfahrzeugs festgestellt wird (160), und
- zumindest ein Betriebsparameter (SOC, T_{BAT}) des die elektrische Maschine und den Energiespeicher umfassenden elektrischen Antriebs, der mit der Betriebsfähigkeit des elektrischen Antriebs im Zusammenhang steht, ein Kriterium für eine verminderte Betriebsfähigkeit des elektrischen Antriebs erfüllt (170).

8. Verfahren nach Anspruch 7, wobei für den Fall, dass ein fahrerseitiger Neustart festgestellt wird und der zumindest eine Betriebsparameter das Kriterium für die verminderte Betriebsfähigkeit des elektrischen Antriebs nicht erfüllt, kein Sonderbetrieb bei eingeschaltetem Verbrennungsmotor ausgelöst wird und stattdessen das Fahrzeug über die elektrische Maschine im rein elektrischen Betrieb (120) bei ausgeschaltetem Verbrennungsmotor angetrieben wird.

9. Verfahren nach einem der vorhergehenden Ansprüche, wobei der Sonderbetrieb (180) beendet und der Verbrennungsmotor abgeschaltet wird, wenn eine Bauteildiagnosefunktion einen Kraftstoffmangel feststellt und insbesondere daraufhin ein Abschalten des Verbrennungsmotors aufgrund Kraftstoffmangel fordert.

10. Verfahren nach einem der vorhergehenden Ansprüche, wobei
- im Fall eines fahrerseitigen Neustarts (190) des Hybridfahrzeugs nach einem vorherigen Sonderbetrieb (180) das Fahrzeug wieder im Sonderbetrieb (180) bei eingeschaltetem Verbrennungsmotor betrieben wird, wenn festgestellt wird, dass ein Betriebsparameter (SOC, T_{BAT}) des die elektrische Maschine und den Energiespeicher umfassenden elektrischen Antriebs, der mit der Betriebsfähigkeit des elektrischen Antriebs im Zusammenhang steht, ein Kriterium für eine verminderte Betriebsfähigkeit des elektrischen Antriebs erfüllt (200), und
- im Fall eines fahrerseitigen Neustarts (160) des Hybridfahrzeugs nach einem vorherigen Sonderbetrieb (180) das Fahrzeug wieder im rein elektrischen Betrieb (120) bei ausgeschaltetem Verbrennungsmotor betrieben wird, wenn festgestellt wird, dass der Betriebsparameter (SOC, T_{BAT}) des die elektrische Maschine und den Energiespeicher umfassenden elektrischen Antriebs, der mit der Betriebsfähigkeit des elektrischen Antriebs im Zusammenhang steht, das Kriterium für eine verminderte Betriebsfähigkeit des elektrischen Antriebs nicht erfüllt.

11. Verfahren nach einem der vorhergehenden Ansprüche, wobei es sich bei dem Hybridfahrzeug um ein Plug-In-Hybrid-Fahrzeug handelt.

12. Steuereinrichtung zum Steuern des Betriebs eines Hybridfahrzeugs mit einem Verbrennungsmotor und einer elektrischen Maschine zum Antreiben des Hybridfahrzeugs, wobei der Verbrennungsmotors aus einem Kraftstofftank mit Kraftstoff versorgt wird, der Kraftstofffüllstand (FS) des Kraftstofftanks mit einem Kraftstofffüllstandssensor bestimmt wird, die elektrische Maschine aus einem Energiespeicher mit elektrischer Energie versorgt wird und das Fahrzeug über die elektrische Maschine im rein elektrischen Betrieb bei ausgeschaltetem Verbrennungsmotor antreibbar ist, wobei die Steuereinrichtung eingerichtet ist,
- festzustellen (110), dass der Kraftstofffüllstandssensor das Erreichen oder Unterschreiten eines unteren Füllstands anzeigt, und
- in Reaktion hierauf, ein Ausschalten des Verbrennungsmotors und ein Antreiben des Fahrzeugs über die elektrische Maschine im rein elektrischen Betrieb (120) bei ausgeschaltetem Verbrennungsmotor auszulösen,
**dadurch gekennzeichnet, dass**
die Steuereinrichtung eingerichtet ist, nach dem rein elektrischem Betrieb (120) des Fahrzeugs ein Einschalten des Verbrennungsmotors und ein Antreiben des Fahrzeugs über den Verbrennungsmotor in einem Sonderbetrieb (180) bei eingeschaltetem Verbrennungsmotor auszulösen, sofern eine oder mehrere Bedingungen für den Sonderbetrieb erfüllt sind (160, 170), , wobei die eine oder die mehreren Bedingungen für den Sonderbetrieb umfassen, dass ein fahrerseitiger Neustart des Hybridfahrzeugs festgestellt wird (190), nachdem nach einem rein elektrischen Betrieb des Fahrzeugs der Fahrer das Fahrzeug aufgrund mangelnder elektrischer Betriebsfähigkeit gestoppt hat oder das Fahrzeug liegen geblieben ist.

## Claims

1. Method for operating a hybrid vehicle comprising an internal combustion engine and an electrical machine for driving the hybrid vehicle, wherein the internal combustion engine is supplied with fuel from a fuel tank, the fuel filling level (FS) of the fuel tank is determined using a fuel filling level sensor, the electrical machine is supplied with electrical energy from an energy store, and the vehicle can be driven in the purely electric mode, with the internal combustion engine switched off, by means of the electrical machine, comprising the steps of:
- establishing (110) that the fuel filling level sensor indicates that a lower filling level has been reached or undershot; and,
- in response to this, switching off the internal combustion engine and driving the vehicle in the purely electric mode (120), with the internal combustion engine switched off, by means of the electrical machine,
**characterized by** the additional step of:
- after the purely electric mode (120) of the vehicle, switching on the internal combustion engine and driving the vehicle by means of the internal combustion engine in a special mode (180) with the internal combustion engine switched on, provided that one or more conditions for the special mode are satisfied (160, 170), wherein the one or the several conditions for the special mode comprise restarting of the hybrid vehicle by the driver being established (190) after the driver has stopped the vehicle on account of a lack of electrical operating capability or the vehicle has broken down after a purely electric mode of the vehicle.

2. Method according to Claim 1, wherein a changeover to the special mode is made after the motor start/motor stop button is operated twice by the driver.

3. Method according to either of the preceding claims, wherein the special mode (180) corresponds substantially to the normal mode (100), with the difference that the charging power for charging the battery is limited in comparison to the normal mode (100).

4. Method according to one of the preceding claims, wherein the lower filling level corresponds to an empty fuel tank and it is established in the first-mentioned step that the fuel filling level sensor indicates an empty fuel tank.

5. Method according to one of the preceding claims, wherein the one or more conditions (160, 170) for the special mode (180) comprise at least one operating parameter (SOC, T_{BAT}) of the electric drive which comprises the electrical machine and the energy store and is related to the operational capability of the electric drive satisfying a criterion for reduced operational capability of the electric drive.

6. Method according to Claim 5, wherein it is established that the state of charge (SOC) of the energy store as operating parameter of the electric drive is less than or less than or equal to a prespecified threshold value (SOC_{TH}).

7. Method according to one of the preceding claims, wherein the conditions for a special mode (180) comprise
- restarting of the hybrid vehicle by the driver being established (160), and
- at least one operating parameter (SOC, T_{BAT}) of the electric drive which comprises the electrical machine and the energy store and which is related to the operational capability of the electric drive satisfying (170) a criterion for reduced operational capability of the electric drive.

8. Method according to Claim 7, wherein if restarting by the driver is established and the at least one operating parameter does not satisfy the criterion for reduced operational capability of the electric drive, a special mode with the internal combustion engine switched on is not triggered and, instead, the vehicle is operated in the purely electric mode (120), with the internal combustion engine switched off, by means of the electrical machine.

9. Method according to one of the preceding claims, wherein the special mode (180) is ended and the internal combustion engine is turned off when a component diagnosis function establishes a lack of fuel and, in particular in response to this, requests the internal combustion engine be turned off on account of a lack of fuel.

10. Method according to one of the preceding claims, wherein,
- in the event of restarting (190) of the hybrid vehicle by the driver after a previous special mode (180), the vehicle is again operated in the special mode (180) when the internal combustion engine is switched on if it is established that an operating parameter (SOC, T_{BAT}) of the electric drive which comprises the electrical machine and the energy store and is related to the operational capability of the electric drive satisfies (200) a criterion for reduced operational capability of the electric drive, and,
- in the event of restarting (160) of the hybrid vehicle by the driver after a previous special mode (180), the vehicle is again operated in the purely electric mode (120) when the internal combustion engine is switched on if it is established that the operating parameter (SOC, T_{BAT}) of the electric drive which comprises the electrical machine and the energy store and is related to the operational capability of the electric drive does not satisfy the criterion for reduced operational capability of the electric drive.

11. Method according to one of the preceding claims, wherein the hybrid vehicle is a plug-in hybrid vehicle.

12. Control device for controlling the operation of a hybrid vehicle comprising an internal combustion engine and an electrical machine for driving the hybrid vehicle, wherein the internal combustion engine is supplied with fuel from a fuel tank, the fuel filling level (FS) of the fuel tank is determined using a fuel filling level sensor, the electrical machine is supplied with electrical energy from an energy store, and the vehicle can be driven in the purely electric mode, with the internal combustion engine switched off, by means of the electrical machine, wherein the control device is designed
- to establish (110) that the fuel filling level sensor indicates that a lower filling level has been reached or undershot, and,
- in response to this, to trigger switch off of the internal combustion engine and driving of the vehicle in the purely electric mode (120), with the internal combustion engine switched off, by means of the electrical machine,
**characterized in that**,
after the purely electric mode (120) of the vehicle, the control device is designed to trigger switch on of the internal combustion engine and driving of the vehicle by means of the internal combustion engine in a special mode (180) with the internal combustion engine switched on, provided that one or more conditions for the special mode are satisfied (160, 170), wherein the one or the several conditions for the special mode comprise restarting of the hybrid vehicle by the driver being established (190) after the driver has stopped the vehicle on account of a lack of electrical operating capability or the vehicle has broken down after a purely electric mode of the vehicle.

## Revendications

1. Procédé permettant de faire fonctionner un véhicule hybride doté d'un moteur à combustion interne et d'un moteur électrique servant à entraîner le véhicule hybride, dans lequel le moteur à combustion interne est alimenté en carburant à partir d'un réservoir de carburant, le niveau de carburant (FS) du réservoir de carburant est déterminé au moyen d'un capteur de niveau de carburant, le moteur électrique est alimenté en énergie électrique à partir d'un accumulateur d'énergie et le véhicule peut être entraîné au moyen du moteur électrique dans un mode de fonctionnement purement électrique dans lequel le moteur à combustion interne est arrêté, comprenant les étapes suivantes :
- déterminer (110) que le capteur de niveau de carburant indique que le niveau a atteint ou est descendu en dessous d'un niveau inférieur ; et
- en réponse, arrêter le moteur à combustion interne et entraîner le véhicule au moyen du moteur électrique dans un mode de fonctionnement purement électrique (120) dans duquel le moteur à combustion interne est arrêté,
**caractérisé par** l'étape supplémentaire suivante :
- après le mode de fonctionnement purement électrique du véhicule (120), mettre en marche le moteur à combustion interne et entraîner le véhicule au moyen du moteur à combustion interne dans un mode de fonctionnement spécial (180) dans lequel le moteur à combustion interne est en marche, sous réserve qu'une ou plusieurs conditions pour le mode de fonctionnement spécial soient remplies (160, 170), dans lequel lesdites une ou plusieurs conditions pour le mode de fonctionnement spécial comprennent le fait qu'un redémarrage côté conducteur du véhicule hybride est détecté (190) après que, après un mode de fonctionnement purement électrique du véhicule, le conducteur a arrêté le véhicule en raison d'une incapacité de fonctionnement en mode électrique ou que le véhicule est tombé en panne.

2. Procédé selon la revendication 1, dans lequel, après que le conducteur a appuyé deux fois sur le bouton de démarrage/arrêt du moteur, un basculement dans le mode de fonctionnement spécial est effectué.

3. Procédé selon l'une des revendications précédentes, dans lequel le mode de fonctionnement spécial (180) correspond sensiblement au mode de fonctionnement normal (100), à la différence que la puissance de charge pour la charge de la batterie est limitée par comparaison au mode de fonctionnement normal (100).

4. Procédé selon l'une des revendications précédentes, dans lequel le niveau inférieur correspond à un réservoir de carburant vide et dans lequel, lors de l'étape mentionnée en premier lieu, il est déterminé que le capteur de niveau de carburant indique un réservoir de carburant vide.

5. Procédé selon l'une des revendications précédentes, dans lequel lesdites une ou plusieurs conditions (160, 170) pour le mode de fonctionnement spécial (180) comprennent le fait qu'au moins un paramètre de fonctionnement (SOC, T_{BAT}) de l'entraînement électrique comprenant le moteur électrique et l'accumulateur d'énergie, qui est lié à la capacité de fonctionnement de l'entraînement électrique, remplit un critère de capacité de fonctionnement réduite de l'entraînement électrique.

6. Procédé selon la revendication 5, dans lequel il est détecté que l'état de charge (SOC) de l'accumulateur d'énergie, en tant que paramètre de fonctionnement de l'entraînement électrique, est inférieur ou égal à une valeur de seuil prédéterminée (SOC_{TH}).

7. Procédé selon l'une des revendications précédentes, dans lequel les conditions pour un mode de fonctionnement spécial (180) comprennent notamment
- le fait qu'un redémarrage côté conducteur du véhicule hybride est détecté (160), et
- le fait qu'au moins un paramètre de fonctionnement (SOC, T_{BAT}) de l'entraînement électrique comprenant le moteur électrique et l'accumulateur d'énergie, qui est lié à la capacité de fonctionnement de l'entraînement électrique, remplit un critère de capacité de fonctionnement réduite de l'entraînement électrique (170).

8. Procédé selon la revendication 7, dans lequel, dans le cas où un redémarrage côté conducteur est détecté et où ledit au moins un paramètre de fonctionnement ne remplit pas le critère de capacité de fonctionnement réduite de l'entraînement électrique, aucun mode de fonctionnement spécial n'est déclenché lorsque le moteur à combustion interne est mis en marche et, au lieu de cela, le véhicule est entraîné au moyen du moteur électrique dans un mode de fonctionnement purement électrique (120) dans lequel le moteur à combustion interne est arrêté.

9. Procédé selon l'une des revendications précédentes, dans lequel le mode de fonctionnement spécial (180) est interrompu et le moteur à combustion interne est arrêté lorsqu'une fonction de diagnostic des composants détecte un manque de carburant et, en particulier, exige alors un arrêt du moteur à combustion interne en raison d'un manque de carburant.

10. Procédé selon l'une des revendications précédentes, dans lequel
- dans le cas d'un redémarrage côté conducteur (190) du véhicule hybride après un mode de fonctionnement spécial (180) précédent, le véhicule est remis en marche dans le mode de fonctionnement spécial (180) dans lequel le moteur à combustion est en marche lorsqu'il est détecté qu'un paramètre de fonctionnement (SOC, T_{BAT}) de l'entraînement électrique comprenant le moteur électrique et l'accumulateur d'énergie, qui est lié à la capacité de fonctionnement de l'entraînement électrique, remplit un critère de capacité de fonctionnement réduite de l'entraînement électrique (200), et
- dans le cas d'un redémarrage côté conducteur (160) du véhicule hybride après un mode de fonctionnement spécial (180) précédent, le véhicule est remis en marche dans un mode de fonctionnement purement électrique (120) dans lequel le moteur à combustion est arrêté lorsqu'il est détecté que le paramètre de fonctionnement (SOC, T_{BAT}) de l'entraînement électrique comprenant le moteur électrique et l'accumulateur d'énergie, qui est lié à la capacité de fonctionnement de l'entraînement électrique, ne remplit pas le critère de capacité de fonctionnement réduite de l'entraînement électrique.

11. Procédé selon l'une des revendications précédentes, dans lequel le véhicule hybride est un véhicule hybride rechargeable.

12. Dispositif de commande permettant de commander le fonctionnement d'un véhicule hybride doté d'un moteur à combustion interne et d'un moteur électrique servant à entraîner le véhicule hybride, dans lequel le moteur à combustion interne est alimenté en carburant à partir d'un réservoir de carburant, le niveau de carburant (FS) du réservoir de carburant est déterminé au moyen d'un capteur de niveau de carburant, le moteur électrique est alimenté en énergie électrique à partir d'un accumulateur d'énergie et le véhicule peut être entraîné au moyen du moteur électrique dans un mode de fonctionnement purement électrique dans lequel le moteur à combustion interne est arrêté, dans lequel le dispositif de commande est conçu pour
- déterminer (110) que le capteur de niveau de carburant indique que le niveau a atteint ou est descendu en dessous d'un niveau inférieur ; et
- en réponse, déclencher un arrêt du moteur à combustion interne et entraîner le véhicule au moyen du moteur électrique dans un mode de fonctionnement purement électrique (120) dans lequel le moteur à combustion interne est arrêté,
**caractérisé en ce que** le dispositif de commande est conçu, après le mode de fonctionnement purement électrique (120) du véhicule, pour déclencher une mise en marche du moteur à combustion interne et l'entraînement du véhicule au moyen du moteur à combustion interne dans un mode de fonctionnement spécial (180) dans lequel le moteur à combustion interne est en marche, sous réserve qu'une ou plusieurs conditions pour le mode fonctionnement spécial soient remplies (160, 170), dans lequel lesdites une ou plusieurs conditions pour le mode de fonctionnement spécial comprennent le fait qu'un redémarrage côté conducteur du véhicule hybride est détecté (190) après que, après un mode de fonctionnement purement électrique du véhicule, le conducteur a arrêté le véhicule en raison d'une incapacité de fonctionnement en mode électrique ou que le véhicule est tombé en panne.
